# EUROPEAN PATENT APPLICATION

(11) **EP 2 653 032 A1**
(43) Date of publication of application: **23.10.2013**
(21) Application number: 11849693.4
(22) Date of filing: 13.12.2011
(51) Int. Cl.: A01K 61/00

(54) **METHOD FOR ASSEMBLING AND TRANSPORTING SQUARE AND CIRCULAR CAGE-RAFTS USED FOR FARMING AND POLYETHYLENE FLOTATION SYSTEM FOR SUPPORTING RIGID AQUATIC STRUCTURES**

(30) Priority: 16.12.2010 CL 14462010
(71) Applicant: Ecosea Farming S.A., Puerto Montt (CL)
(72) Inventor: HURTADO FERREIRA, Carlos Felipe, Puerto Montt (CL); SÁNCHEZ RACCARO, Rodrigo, Puerto Montt (CL); SUAZO FUENTEALBA, Gonzalo, Puerto Montt (CL)
(74) Representative: Carvajal y Urquijo, Isabel
(86) International application number: PCT/CL2011/000077
(87) International publication number: WO 2012/079186

(57) **Abstract**

A method for assembling and transporting square and circular rigid cage-rafts used for fish farming, which includes the following steps: (a) marking out the surface of extending slings; (b) assembling the bottom and the side walls of the cage; (c) assembling the floatation system; (d) connecting to the floatation system; (e) assembling the structural raft; (f) installing additional buoys on the cage for transport step; (g) transport by sea; and (h) extending and coupling to fish cages. Also, a floatation polyethylene system for supporting rigid aquatic structures.

## Description

### Technical field

The technology is directed to aquaculture field, specifically, the invention is related to a method for management of large aquaculture structures used in sea and a floatation system for supporting rigid aquatic structures.

### Prior Art

Fish culture systems using floating cages and rafts have been broadly used worldwide. These, nevertheless, have been challenged to face different problems associated mainly to changing weather conditions, for example, the effect of undercurrents, surges and wind, generating structural demand which in general is translated in wear and breakage of connections. On the other hand, culture using floating structures, further requires complex logistics, in which working times must be optimized, assuring safety conditions in the different operations. Further prohibitions imposed by marine authorities are also to be considered.

In order to improve culture conditions a series of structural solutions have been developed, among which construction of rigid mesh cages, diminishing deformations, reducing maintenance labor and in many cases controlling organism fixation. Nevertheless, using these meshes generates a series of drawbacks derived from management, construction and transport of these systems to the culture zones.

Rigid meshes have a greater weight than traditional nylon meshes or cages, and therefore there is no need for using additional structures for supporting the system. On the other hand, construction of this type of cages as well as its manipulation is complex.

In certain situations, cage construction systems based in disposable steel wire frameworks disposed over the cages have been used, with the objective of containing rigid meshes and facilitating the towing of the whole system; which turns out to be an unsuitable when a fast construction is required, since the assembly is performed in the water, and additional specific equipment is required.

Considering the abovementioned background, is clear that it is needed the fabrication of a method for management of large culture structures used in the sea.

A patent search was performed in the main national and international patent office databases, some of the documents found are related to the present technology, which are presented below:
Invention patent WO2004017725: "Net cage installation for fish farming". The patent is directed to installation of cages disposed for substitution of nets while fish remain in the cage, and the method for net replacement. The installation comprises a net; a floating structure with runways disposed circularly around the net and a number of suspended nets placed internally and circumferentially with respect to the runway. A rail system is disposed internally to that runway and is used when changing the net.
Invention patent WO2009047213: "Anti predator semi rigid steel wire fence system". The patent describes an edge fence for a floating structure, and further describes a method for including a floating structure. Said method comprises installing supporting structures adjusting them to edge tubes present in a floating structure; mounting some posts comprising attachment means through rods in the support pins; inserting rods vertically interlaced with the meshes; and fixing the posts.

These technologies do not reproduce either totally or partially our innovation, and therefore the novelty requirement would be met.

### Disclosure of the Invention

The present technology corresponds to a procedure for assembling and transport of cage-raft systems preferentially made of copper alloys, which allow a fish culture capacity of over 9,000 m³. Also, the innovation contemplates a tubular floating structure coupling to the raft-cage system, which can support a weight of over 14 tons.

This procedure allows construction of the system in intertidal zone or in mainland, differing from the conventional methods which operate on floating structures, thus improving operational safety, decreasing associated costs for supplies and construction time, since the operation can be made with no climatic restrictions.

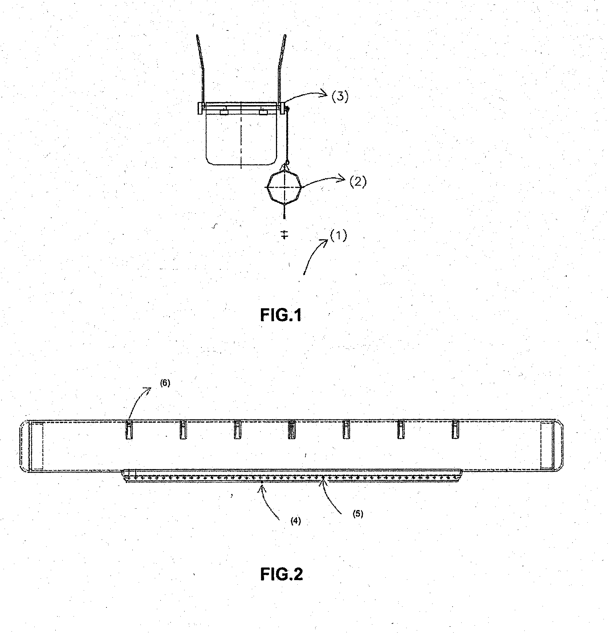

For a better illustration Figure 1 presents a transversal view of the system, which is composed of a net fabricated with rigid meshes (1) to which a low, medium or high density polyethylene floating structure (2) is attached, depending on the energy or expected climatic conditions for the culture zone. In turn, the floating structure is connected to the raft runways (3). The cages present, preferentially, a square or circular shape.

In Figure 2 the tubular structure is illustrated, having a diameter between 400 - 800 mm and a length between 4 - 12 m; wherein similar dimensions should be considered for circular rafts. This section is provided with platens or flanges (4) with holes, elaborated with the same material as the tubular structure, these are localized in the inferior part, and are used for attaching the mesh. The particularity of this section is that at the level of each mesh an attachment with the hole in the platen is generated, which allows uniformly distributing the weight of the mesh and strains generated due to operating mesh dragging.

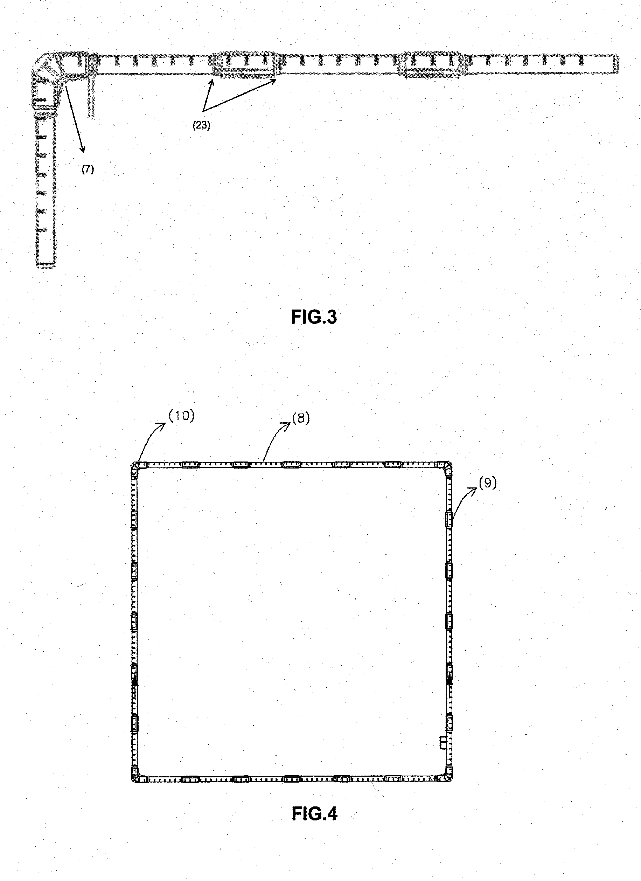

Separation between holes (5) of the platen is determined according to the size or geometry of the mesh which would be required in the assembly, which corresponds to between 20 - 60 mm. The attachment between mesh and platen is made by using a polypropylene cable, which crosses between each opening of the mesh and each hole in the platen. In the top part, attachment means (6) are placed, which serve for attaching the floatation system to the floating raft or structure. This attachment is made using a cable, which also controls deflection of floatation tubes. In the particular case of square raft-cages, Figure 3 presents the union elbows (7) used.

In general terms, the floatation system comprises (Figure 4):
- a tubular section (8) which can adopt a straight or curve shape;
- couplings for union between sections (9); and
- union elbows or corners (10), for the particular case of square type cages.

Using this floatation system avoids structural damage in raft-cages associated to unwander torsions and breaks in lateral or runway union zones. Also, allows that the mesh is always underwater, reducing corrosion produced by water-air interface.

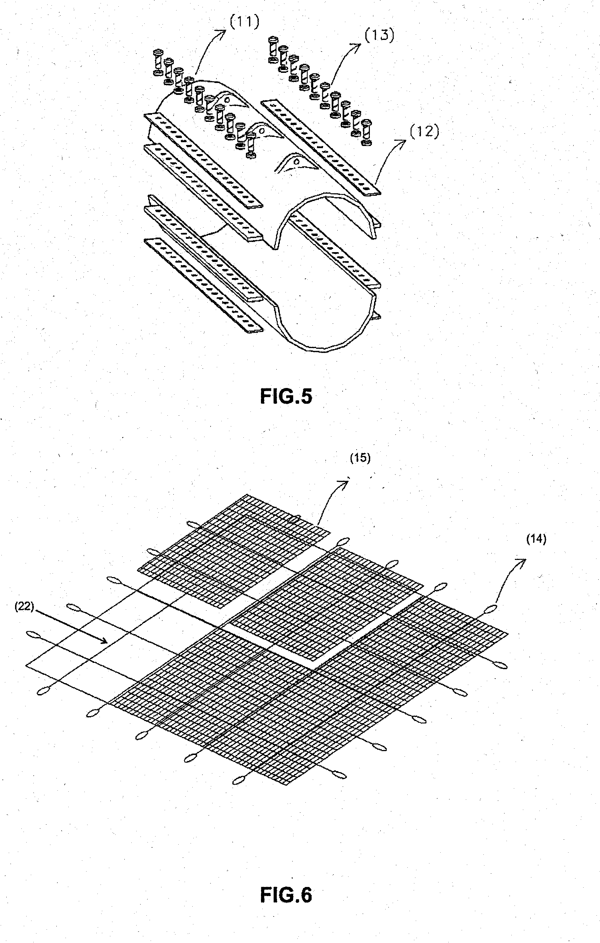

The floatation system is assembled through assemblies (check Figure 5), for which union couplings (11), corresponding to basically two semicircular structures united by blots (13) through platens, are used, which produces structural strength to both parts, and at the same time allows the union of adjacent tubular floaters. In this way, the unity and structural integrity of the floatation system is achieved, which is required in operating conditions of the fish culture. The main function of these union couplings is avoiding the vertical movement in tubular sections, substantially reducing the mesh wear in this zone. Just like in the straight tubular sections, couplings have platens in the inferior part, disposed in a similar fashion; their diameter exceeds in at least 20 mm to the one of those disposed in straight sections, since in operation they are covering each one of the ends of the adjacent straight sections and present lengths between 500 and 1,700 mm.

On the other hand, the parts conforming the corners or union elbows of the system for square rafts are similar to the union couplings for straight sections. These couplings present a square angle for joining tubes in the vertices or corners of the floatation system. This coupling, as well as the previous devices, uses platens and bolts, as well as upper attachment elements for joining to the runways.

The assembly, transport and display procedure of raft-cages comprises the following stages:
1. marking the surface and slings display;
2. assembly of the bottom and lateral walls of the cage;
3. assembly of the floatation system;
4. union to the floatation system;
5. assembly of structural raft;
6. installing additional buoys on the cage for transportation;
7. transportation by sea; and
8. display and coupling to fish cages.

The detail of each of the stages is described below:

### 1. Marking the surface and slings display (Figure 6)

The assembly process starts by emplacing the mesh in a flat surface or intertidal zone, which allows a surprising decrease of one third of the assembly time compared to the traditional systems which are emplaced on a floating structure with a rigid mesh.

This stage starts by positioning and fixing on the shore a series of polypropylene cables, conforming a support net for the meshes. Just for square as well as circular rafts, this series of cables presents a square shape to facilitate further removal of the raft-cage system from the intertidal zone in the shore and transportation for displaying site.

In order to allow a correct alignment and distribution of meshes it is necessary to delimit the working zone according to the required dimensions of the raft (15), by using cables delimiting the ends of the cage to be constructed which are tighten using stakes which are placed in each of the ends and mid sections of each side.

Previously, a framework of slings or cables (22) for facilitating refloating of meshes from the shore, using a boat for dragging into the sea; it is also avoided that the cage cloths are displayed vertically in their full dimension due to the advance at the moment of dragging. Said slings ("2) are placed in the bottom before placing the mesh cloths, in order to assure the moment of removal of the cage from the shore, and during the refloating and transport process. These slings support the net weight and avoid its vertical display, facilitating transport of the system from the shore and towing. For displaying of slings on the shore, at least 10% greater than the cage size diameter must be considered; for which synthetic fiber cables are used for delimiting the surface that the net cloths will use once assembled. The slings support disposed on the shore is fabricated in polypropylene having a diameter oscillating between 14 - 20 mm, depending on the working depth of the mesh. The slings (22) must be displayed in horizontal and vertical direction, generating a square of 4 -5 m length, wherein their ends end in loops (14) (in the shape of ears fabricated with polypropylene), for further connection with slings of the same dimension in the tubular floatation system.

In the case of square rafts, the structural raft is assembled in the perimeter of the cage constructed on the shore, for which the handrail of the cage must be joined to the floatation system (on their upper part) using cables, thus having all ready for towing to the culture center, wherein finally the mesh is displayed and further coupled to the culture modules installed in the sea.

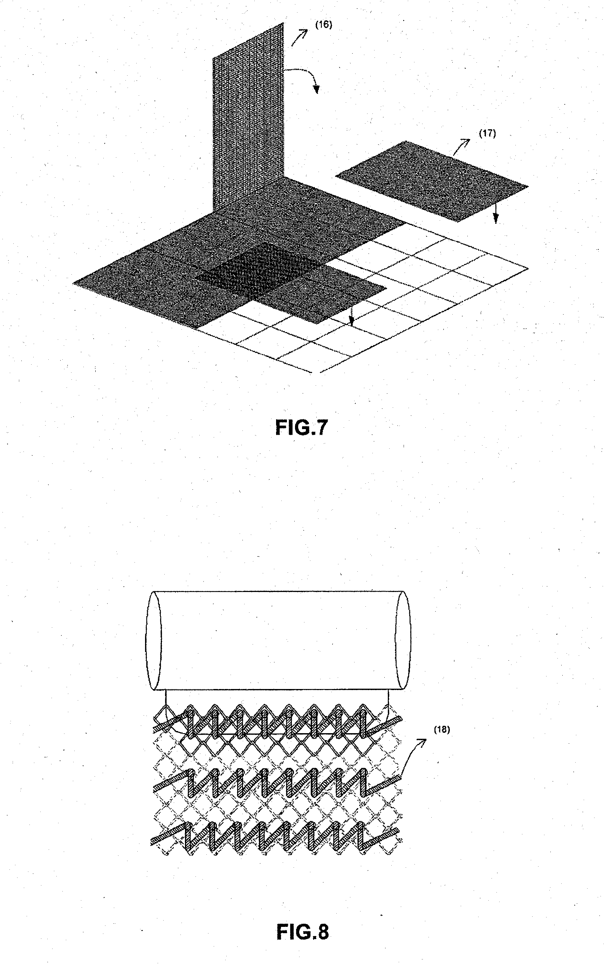

### 2. Assembly of the bottom and lateral walls of the cage (Figure 7)

In this stage, a preferably squared or circular in shape, rigid mesh panel (17) must be fabricated, corresponding to the bottom of the raft-cage with dimensions between 20 - 40 m long for square cages and from 20 - 100 m diameter for circular cages. Afterwards, the panels conforming the lateral walls (16) of the cage must be joined for a square raft-cage. In the case of square cages, the panels present a length between 10 - 30 m and 5 - 30 m width; and for circular cages, the lateral panels present a length between 10 -30 m and 5 -30 m length.

In order to join these panels, the bottom panel must be straightened, squared, and staked, based on alignment cables previously displayed for a correct display and adjustment of mesh rolls which will conform the lateral panels. These are joined using wire threads of the same material of the mesh, further reinforcing the union edges of the bottom panel and the union zone of the floaters (upper zone of the wall of the cage).

Once all the activities for assembly of the bottom are done, the assembly and construction of cage walls start. In this stage, two types of attachments or seams must be used in the meshes for bottom assembly: longitudinal attachment in adjacent mesh panels conforming the wall, and transversal attachments in the union points of the walls to the bottom of the cage already assembled. Specifically, this stage corresponds to the assembly of what will be vertical walls forming the cage.

In order to double the strength of the upper part of the walls, a double line of reinforcement polypropylene cables is placed. In Figure 8, the way of interlacing two cable lines between the meshes, from the upper border (18) with a separation of 10 - 50 cm is observed; which allows reinforcing the union between the mesh and the floatation system. This facilitates the maintenance, since already has a second union line. Also, this double line allows redistribution of strain, in such a manner that not only the first meshes resist the full weight of the mesh, but also the cables.

### 3. Assembly of the floatation system (Figure 4)

This stage corresponds to the assembly of the floatation structure which will support the full weight of the cage, once displayed in the water. This system is composed by straight or curved floaters, accordingly, for each one of the sides or sections of the cage. To each one of these fixed tubular floaters, 20 kg/m3 density polystyrene is injected, in order to avoid undesired sinking due to accidental breakage of tubes. Two types of connectors of the same material are used for joining straight or curved section tubes and thus providing the necessary rigidity to the auxiliary floatation system: straight or curved couplings (9) and corner or elbow couplings (10) for each of the vertices or corners in the case of square cages.

The system employed for fixing the couplings is composed of two platens of galvanized steel bolted over the lateral platens of the couplings. In this way, once the floaters of one side of the raft are aligned with their respective couplings, the positioning and bolting of platens in both sides of the tubes is performed, thus obtaining a joined side of floatation ready for joining to the cage.

### 4. Union of the cage to the floatation system

Once the tubular floater lines are coupled and joined definitively, the union to the walls of the mesh is performed. In this stage, union meshes must be adjusted, distributed and fixed, to proceed with the sewing of the edges of the mesh to the floaters.

Mesh folds correspond to required creases allowing joining the upper edge of the walls of the mesh cage to the edge of tubular floaters contour, since in a first instance these borders are in the central part of the working site, and it is required to move them to the edge zone in order to allow the union to the floaters.

Once the walls of the cage are folded to the exterior edge and the line of floaters is adjusted/aligned, the union of walls to this structure is performed by sewing the upper borders of the cage to the flanges of the tubular floaters, the latter provided with holes or perforations through which the polypropylene cables are inserted, which is further cross linked mesh-hole-mesh (Figure 8). The length of each cable used per section of flange is a function of the tubular unitary length of each section (straight or curved), with knots every 8 to 10 passing of continuous meshes.

Performing these edge seams of the cage to the flanges in the floaters is started from the center of the tubular floater to the ends, with the end of avoiding leaving sections in which the mesh could not be manipulated or that the type of union would be impossible to perform.

### 5. Assembly of structural raft

In this stage, the assembly of the structural raft or modules, on which the system will definitely operate in the culture center, is started. Additionally, the structural raft allows refloating or towing from the shore and transport to the final location. The assembly of the structural raft must be started after all the cage walls unions to the tubular floaters have been done, mainly for safety reasons and in order to optimize the time of labor.

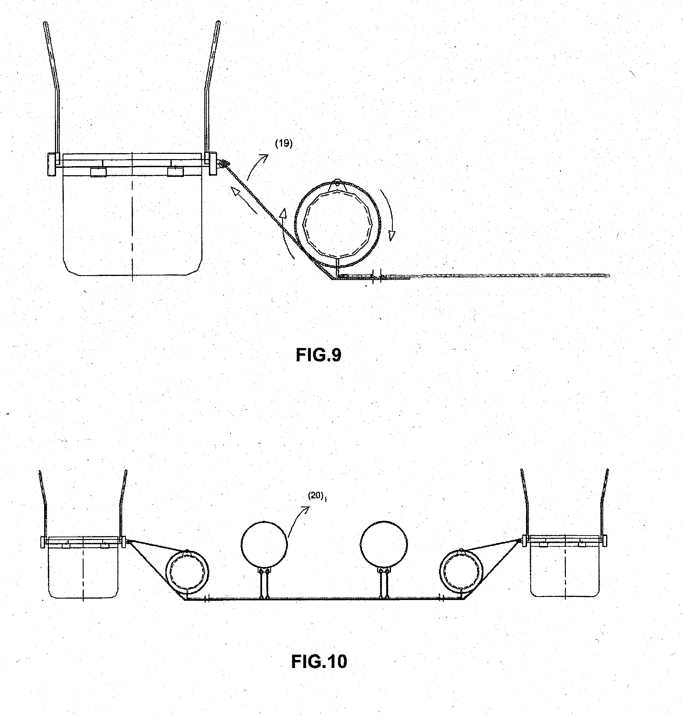

### Rolling of sling cable in line of floaters (Figures 6 and 9)

Consists on rolling a cable from the loops (14) in the slings (net support) in extreme sections (23) of the tubular floater coupling, which ease rolling, to finally end in knotted to bagpipes of the structural raft (19). This activity provides firm attachment of slings supporting the weight of the net in transportation and allows activating the display of the net gradually unrolling and coordinately with each of them, transferring great part of strain to the floaters and not to the raft structure.

### Union of the floating system to the structural raft (Figures 1 and 2)

For this union, loops made with cables with a length lower than 70 cm; are used as union points or attachment using eyebolts (6) in the tubular floater and in the handrail of the cage or structural raft (3)

### Assembly of elbows of cylindrical floaters (square rafts), (Figure 3)

For the particular case of a square raft, this stage is performed for closing the edge of the tubular floating system. It is considered the position and closing of corners with couplings specially designed to this end. This allows achieving a square structure fixed in all its components, avoiding vertical movement of straight tubular sections in their ends. In this way, the whole structure of the floatation system is completed, which will support the weight of the cage during operation. The assembly of corner couplings is performed in two steps:
- placing and aligning the inferior section of the coupling-elbow with the lateral tubular floaters; and
- placing and assembling the upper section fixing with bolts the steel platens,

### 6. Buoys for extra floatation in the cage (Figure 10)

In this stage, 400 L floaters are used to allow auxiliary floatation to the cages (50% the weight of the mesh) in the refloating activity of the system and towing to the definitive placement location. These systems must distribute uniformly over the surface of the bottom and must be tied with polypropylene cables (20). Once this activity is finished, the modules are in condition for towing and transportation to the definitive culture site.

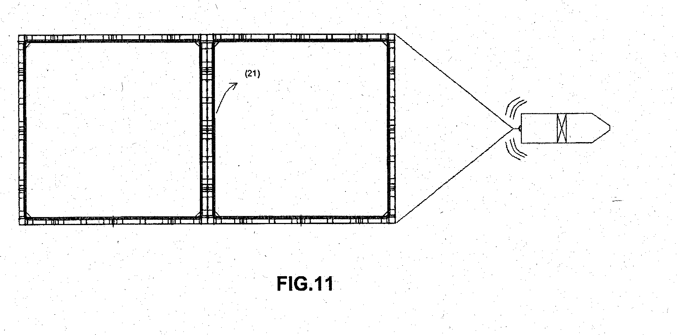

### 7. Transportation by sea (Figure 11)

In the towing stage, at the time the raft-cage system is moved, it is beneficial for the process to consider the maximal variations in tide height allowing better efficiency of the auxiliary floating system. In terms of towing, it is required at least one boat or tugboat with a towing capacity of over 4 tons, which would allow the transport of two to four raft-cage systems each time (21).

### 8. Display and coupling to fish cages (Figures 9 and 10)

Coupling is performed gradually through the tugboat and coupling of at least 4 raft-cages with their respective union system to the funding system, which is installed prior to the activity of coupling of the raft-cage system.

Once coupled the system to the raft-cage train, the display process begins. The activity starts by releasing the cables from slings tied from the bedding to the display device or handrail placed at the level of the runway (19). A supporting boat equipped with diver team, crane and supporting winch, is required for this activity, which will support the corresponding maneuvers.

Once the cables are released from slings, the net is attached to the floaters, having the bedding as backing support. Finally, with the help of divers, the withdrawal of additional floaters is performed, allowing slowly displaying the net, until reaching the end position (20).

### EXAMPLES OF APPLICATION

### Example Nº 1. Assembly and transport of a square raft-cage

The procedure for the assembly of a square raft-cage started by delimiting the location zone, for which slings were placed, which acted as a support for the system.

Slings formed a squared grill with 5 lines in each direction, i.e., each line was 5.25 m apart from the previous one (14). In order to keep the grill straightened, stakes were fixed in the borders, allowing to keep the bottom geometry.

Afterwards, the bottom panel was assembled, which was constituted by 2 panels of 10 m x 14.5 m and 4 panels of 9m x 14.5 m, elaborated with a mesh of a copper alloy of 4 mm diameter and 40 mm rod size (15). The union between these panels was performed by transversal unions and longitudinal unions.

Then, the assembly of lateral panels or walls was performed, for which 8 panels of 10 m x 11m and 4 panels of 9m x 11 m with a wire diameter of 4mm.

This stage was performed by joining each of the adjacent mesh cloths with longitudinal unions (wire copper alloy coiled threads of 11 mm), positioning the panels perpendicular to each one of the edges or sides of the runway of the raft, and further union of these panels to the bottom of the cage using transversal unions with spiral type copper alloy wires, performing this action until all the contour of the cage was complete.

These lengths were joined with spiral type wires of 4.5 mm diameter and 800 mm length positioned along the whole transversal edge, forming the definitive seam. For unions in longitudinal direction of the mesh cloths (or "no knot" sides), in the union was used a thread of the same properties of the adjacent cloths, to which end, an end was introduced screwing through each of the meshes from the edge to the opposite end. Also, copper alloy wires of 5 mm thickness were used as reinforcement of the edges.

Once the construction of lateral panels or cage walls was done, HDPE tubular floaters were installed. These floaters of 450 mm of external diameter and 418 mm internal diameter were joined through straight and curved couplings. Each length of the tubing presented a length of 3 m (a total of 24 units per cage); each straight coupling was 1.7m (20 units per cage); and curved couplings were 1.3 m per side (4 units per cage) (7). The floatation frame, conformed by the continuous union of tubes, was positioned over the slings grill and over the already joined meshes. This tubular floater frame had for objective to support the weight of the cage, corresponding to approximately 14 tons.

In this way, once the tubing was placed, the union between meshes (lateral walls) and inferior platens of the tubes, was made using 20 mm polypropylene cables. In this stage of union, a double line of cables was used in the mesh union zone (18).

Once the meshes and floaters were joined, the union of them to the structural raft was performed. To this end, the runways of the raft were assembled and placed on the sling grill perimeter (or floatation frame perimeter), joining cables of 12mm and 2 m long from each moorage flange in the floaters to the supporting beam in the raft.

For the final towing, the sling grill was connected to the structural raft, to the end of decreasing the exposed area during towing. The union was made using 18 mm cables in lengths of 25 m connected to the supporting beam of the raft, or to the raft runway.

On the other hand, 400 L floaters were installed uniformly over the mesh (20); the number of them depends on the total weight of the mesh. In the case of a 30m x 30m x 11m cage, 16 floaters were used, distributed in rows with 4 floaters. The union of floaters was made in several points of the mesh, in order to avoid punctual deformations. These floaters decreased in approximately 50% the strain exerted by the mesh on the towing stage.

Afterwards, the assembly was moved from the shore and towed to the final placement location. The number of raft-cages that can be towed at the same time depends on the type of boat used.

In the specific case of towing two raft-cages, it is required at least one boat or tugboat (21) with a towing capacity of over 4 tons. Once arriving to the culture center, the coupling of the 4 raft-cages was started, with their respective union system to the funding system that was installed prior to the coupling of the raft-cage system.

Once the system is coupled to the train of the raft-cage, the cage display process started. The activity started by releasing the sling cables tied from the bedding to the handrail located at the runway level (19). To this end, a supporting boat for the maneuvers was used, equipped with diver team, crane and supporting winch.

Once the cables were released from slings, the net was attached to the floaters, having the bedding as backing support. Finally, the auxiliary floaters were withdrawn with the help of divers team, allowing the net to be slowly displayed until reaching the final position (20).

## Claims

1. Method for assembling and transporting rigid square and circular raft-cages used in fish culture, comprising the following stages:
a. marking the surface and slings display;
b. assembly of the bottom and lateral walls of the cage;
c. assembly of the floatation system;
d. union to the floatation system;
e. assembly of structural raft;
f. installing additional buoys on the cage for transportation;
g. transportation by sea; and
h. display and coupling to fish cages.

2. Method for assembling and transporting rigid raft-cages according to claim 1, wherein the assembly of raft-cages is performed on a flat or intertidal zone, and in stage (a) cables are placed on the surface forming a supporting mesh net, and in the bottom of this net are slings to facilitate further removal of the cage.

3. Method for assembling and transporting rigid raft-cages according to claim 1, wherein in stage (b), mesh panels are constructed, for which the bottom panel is straightened, framed and staked using alignment cables joined with wire threads, then the bottom panel union edges and the union zone of floaters corresponding to the upper zone of the walls of the cage are reinforced, afterwards the lateral walls are joined through longitudinal and transversal unions; finally the upper part of the walls is reinforced with a double line of cables.

4. Method for assembling and transporting rigid raft-cages according to claim 1, wherein in stage (c) straight or curved couplings and corner couplings or elbows are used for allowing the union of the floatation system.

5. Method for assembling and transporting rigid raft-cages according to claim 1, wherein in stage (d) the upper edges of the cage are joined to the floaters, starting from the center of the floater to the extremes.

6. Method for assembling and transporting rigid raft-cages according to claim 1, wherein in stage (e) a cable must be rolled from the support of the net in a section of the floater, for further tying to the bagpipes of the structural raft; afterwards the floatation system must be joined to said raft using eyebolts; and finally, for square rafts the elbows must be assembled for closure of the corners.

7. Method for assembling and transporting rigid raft-cages according to claim 1, wherein in stage (f) auxiliary floaters are incorporated for refloating and towing phases, which are distributed uniformly on the surface of the bottom and are tied with cables.

8. Method for assembling and transporting rigid raft-cages according to claim 1, wherein in stage (h) the system is coupled through the towing; the sling cables that are tied from the bedding to the handrail located at the runway level are released, wherein the net is fixed with the floaters having the bedding as backing support; and finally the auxiliary floaters are withdrawn to have the system in the final position for operation.

9. A polypropylene floatation system for supporting rigid aquatic structures, comprising a tubular shaped section, preferentially, straight or curved and with a diameter between 400 - 800 mm and length between 4 - 12 m; union couplings; and union elbows for square type structures.

10. A polypropylene floatation system for supporting rigid aquatic structures according to claim 9, wherein the tubular section is provided with polyethylene platens with holes, located in the inferior zone for union with the mesh; attachment systems in the upper zone for joining the floatation system to the raft or floating structure.

11. A polypropylene floatation system for supporting rigid aquatic structures according to claim 9, wherein the union couplings correspond to two semicircular structures joined through steel platens, avoiding vertical movement between tubular sections, reducing strain of the mesh.

12. A polypropylene floatation system for supporting rigid aquatic structures according to claim 9, allowing to maintain the mesh of raft-cages under water.

13. A polypropylene floatation system for supporting rigid aquatic structures according to claim 9, supporting structures of over 14 tons of weight.
